# EUROPEAN PATENT APPLICATION

(11) **EP 1 179 745 A2**
(43) Date of publication of application: **13.02.2002**
(21) Application number: 01116777.2
(22) Date of filing: 20.07.2001
(51) Int. Cl.: G02B 6/38

(54) **Optical connector adapter**

(30) Priority: 10.08.2000 US 636487
(71) Applicant: F.C.I. - Framatome Connectors International, 92400 Courbevoie (FR)
(72) Inventor: Hung, Viet Ngo, Harrisburg, PA 17112 (US)
(74) Representative: Beetz & Partner Patentanwälte

(57) **Abstract**

An optical connector adapter (22) for connecting optical connectors (16a, 16b) to each other. The adapter (22) comprises a main section (62) having a through channel for receiving mating ends of the optical connectors (16a, 16b). The main section (62) comprises resilient optical connector latches (70, 71) extending into the through channel. The adapter (22) also comprises at least one projection (64) extending from the main section (62). The at least one projection (64) includes a fastener mounting area (66) and a spring support area (68). A fastener (60) can attach the at least one projection (62) to an electrical component (18). A spring (58) can be located between the spring support area (68) and the electrical component (18) to bias the adapter (22) at a first position relative to the electrical component (18).

## Description

### BACKGROUND OF THE INVENTION

### 1. Field of the Invention

The present invention relates to optical connectors and, more particularly, to an adapter for connecting optical connectors to another member.

### 2. Brief Description of Prior Developments

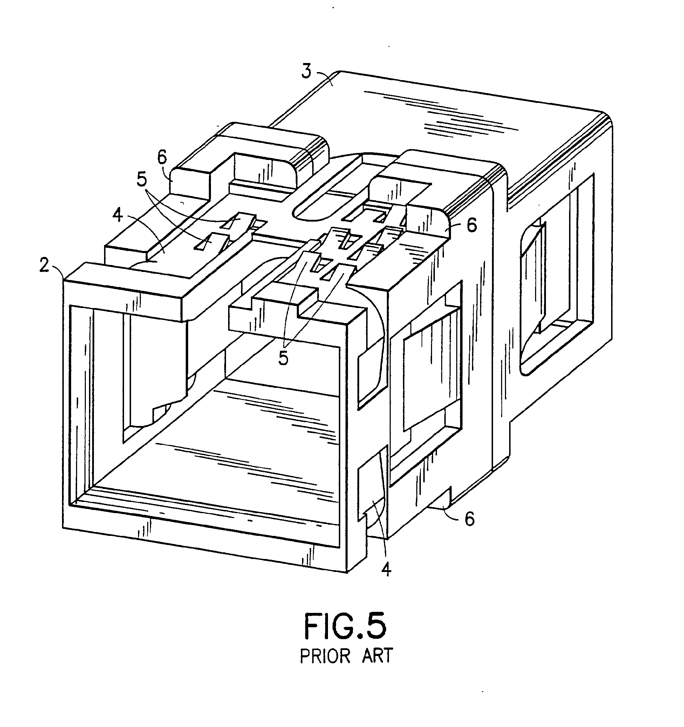

U.S. Patent 5,873,746 discloses a backpanel connector with a spring biased housing moveable in a Z direction. U.S. Patent 4,432,604 discloses a self-adjusting fiberoptic connector assembly having optical fiber plugs connected to a backplane by movable brackets. U.S. Patent 5,828,805 discloses a multifiber optical connector plug. U.S. Patent 4,361,372 discloses a connector panel for an electronic cabinet having spring-loaded cells for a floating plate on a connector panel. Fig. 5 show a conventional optical connector adapter available from FCI USA, Inc. of Etters, Pennsylvania as part number 86144. The adapter comprises two plastic pieces 2,3 connected to each other by two retaining springs 4. The retaining springs 4 have barbs 5. The member 2 also has board contact surfaces 6. When the adapter is inserted into a through-hole of a printed circuit board or backplane, the contact surfaces 6 and the barbs 5 are adapted to locate portions of the backplane therebetween to thereby stationarily attach the adapter to the backplane.

Problems exist with conventional optical fiber connector adapters in that alignment is sometimes unsatisfactory and latching of optical connectors to the adapter is sometimes unsatisfactory. Conventional multi-connection adapters can comprise multi-piece frames which use epoxy to assemble the frames. Frame assembly takes up manufacturing time and can create quality control problems. Conventional adapters also do not necessarily provide adequate connector float in an axis of connector insertion (z-axis float) . There is a desire for an adapter frame to have a stronger body, better latching and better alignment. There is also a desire for spring action of individual adapter housings to compensate for various optical connector connection conditions and allow for greater z-axis float of optical connectors being attached to the adapter. In addition, there is a desire to provide a faster assembly process for assembling an optical fiber connector adapter with greater quality control and without use of epoxy.

### SUMMARY OF THE INVENTION

In accordance with one embodiment of the present invention, an optical connector adapter is provided for connecting optical connectors to each other. The adapter comprises a main section having a through channel for receiving mating ends of the optical connectors. The main section comprises resilient optical connector latches extending into the through channel. The adapter also comprises at least one projection extending from the main section. The at least one projection includes a fastener mounting area and a spring support area. A fastener can attach the at least one projection to an electrical component. A spring can be located between the spring support area and the electrical component to bias the adapter at a first position relative to the electrical component.

In accordance with another embodiment of the present invention, an electronic and optical component system is provided comprising an electronic component; and an optical connector adapter assembly connected to the electronic component. The assembly comprises a housing and at least one spring. The housing comprises resilient optical connector latches and is suitably sized and shaped to removably receive at least two mating optical connectors. The housing is movably mounted in a hole through the electronic component. The at least one spring biases the housing relative to the electronic component in a predetermined direction.

In accordance with one method of the present invention, A method of assembling a backplane assembly comprising steps of providing an optical connector adapter having a housing with a through channel for receiving two mating optical connectors in opposite directions; movably mounting the housing directly in a hole of an electronic component; and biasing the housing in a predetermined direction relative to the electronic component, wherein the housing can slidingly move along the electronic component in the hole.

### BRIEF DESCRIPTION OF THE DRAWINGS

The foregoing aspects and other features of the present invention are explained in the following description, taken in connection with the accompanying drawings, wherein:
Fig. 1 is an exploded partial perspective view of a system incorporating features of the present invention;
Fig. 2 is a perspective partial view of one of the electronic component assemblies shown in Fig. 1 incorporating features of the present invention;
Fig. 3 is a partially exploded perspective view of the optical connector adapter shown in Figs. 1 and 2;
Fig. 4 is a partial cross-sectional view of one of the fastener mounting areas of the adapter shown in Fig. 3; and
Fig. 5 is a perspective view of a conventional optical connector adapter available from FCI USA, Inc. of Etters, Pennsylvania as part number 86144.

### DETAILED DESCRIPTION OF THE PREFERRED EMBODIMENT

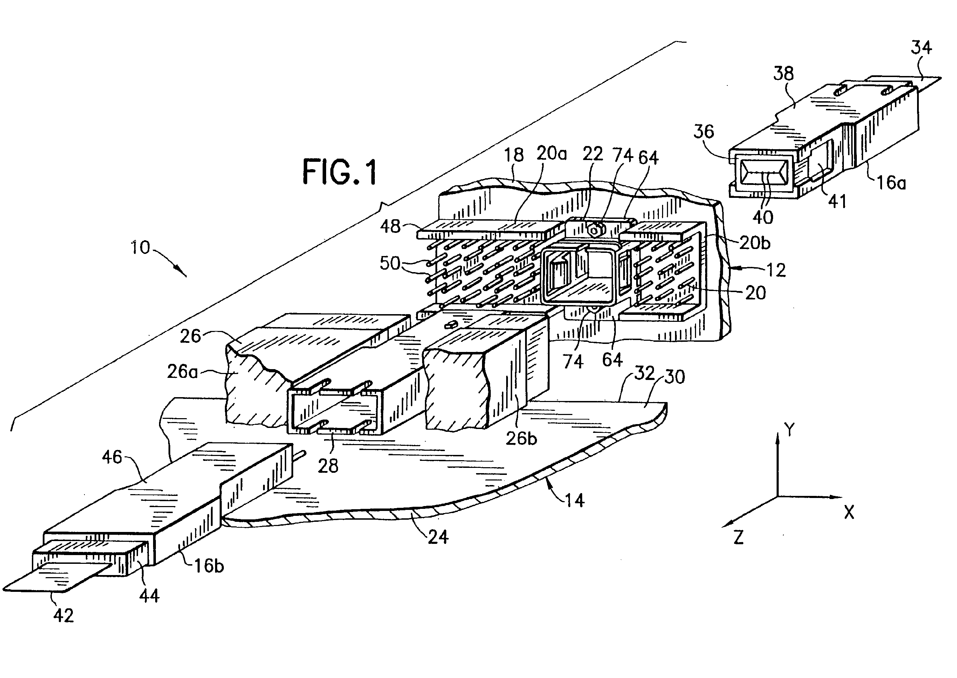

Referring to Fig. 1, there is shown an exploded perspective view of a system 10 incorporating features of the present invention. Although the present invention will be described with reference to the single embodiment shown in the drawings, it should be understood that the present invention can be embodied in many alternate forms of embodiments. In addition, any suitable size, shape or type of elements or materials could be used.

The system 10 generally comprises at least one first electronic assembly 12, at least one second electronic assembly 14, and at least one mateable pair of optical connector assemblies 16a, 16b. The first assembly 12 is preferably a backplane assembly or mother printed circuit board assembly comprising a printed circuit board 18, at least one electrical connector 20 and at least one optical connector adapter 22. The second assembly 14 is preferably a daughter printer circuit board assembly comprising a printed circuit board 24, at least one electrical connector 26, and an optical connector outer housing 28. The optical connector outer housing 28 is fixed and stationarily mounted to a side 30 of the daughter board 24 and extends past a leading edge 32 of the daughter board 24. However, in a alternate embodiment the outer housing 28 could be movably connected to the daughter board 24. In this embodiment the daughter board electrical connector 26 has two sections 26a, 26b. Both sections 26a, 26b are fixedly attached to the side 30 of the daughter board 24 and have front ends which extend past the leading edge 32 of the daughter board 24. In this embodiment the two sections 26a, 26b have the optical connector outer housing 28 therebetween. However, in alternate embodiments the connector 26 might only have one section and/or the outer housing 28 could be located other than between the sections 26a, 26b, and/or the outer housing 28 could be integrally formed with the housing(s) of the connector section(s). The connector 26 preferably comprises a dielectric plastic housing and electrical contacts. The contacts preferably comprise first ends connected to the daughter board 24 and second female ends for removable connection with the contacts of the connector 20.

The first optical connector assembly 16a generally comprises an optical cable assembly 34, an inner ferrule optical conductor and housing subassembly 36, and an outer housing 38. Optical conductors 40 from the optical cable assembly 34 extend to the front face of the subassembly 36. The subassembly 36 is preferably spring loaded in the outer housing 38 towards a forward position in a known manner. The outer housing 38 includes lateral side latch areas 41 for removably latching the outer housing 38 with the adapter 22. However, in alternate embodiments any suitable type of optical connector assembly or its components could be used. The second optical connector assembly 16b generally comprises an optical cable assembly 42, a subassembly 44, and a housing 46. Optical conductors of the cable assembly 42 extend to the front end of the subassembly 44. As with the assembly 16a, the optical conductors are sandwiched between ferrules of the subassembly 44. The subassembly is preferably spring loaded towards a forward position in the housing 46. The housing 46 is preferably snap-lock removably mounted into the outer housing 28 to attach the second optical connector 16b to the daughter board 24. In an alternate embodiment any suitable type of second optical connector 16b and/or outer housing 28 could be used. The outer housing 28 preferably comprises lateral side latch areas (not shown), similar to latch areas 41 on the outer housing 38, for removably latching the outer housing 28 with the adapter 22. Examples of some types of optical connectors and adapters are described in U.S. Patent No. 5,828,805 and U.S. Patent Application Nos. 09/536,522; 09/608,666 which are hereby incorporated by reference in their entireties.

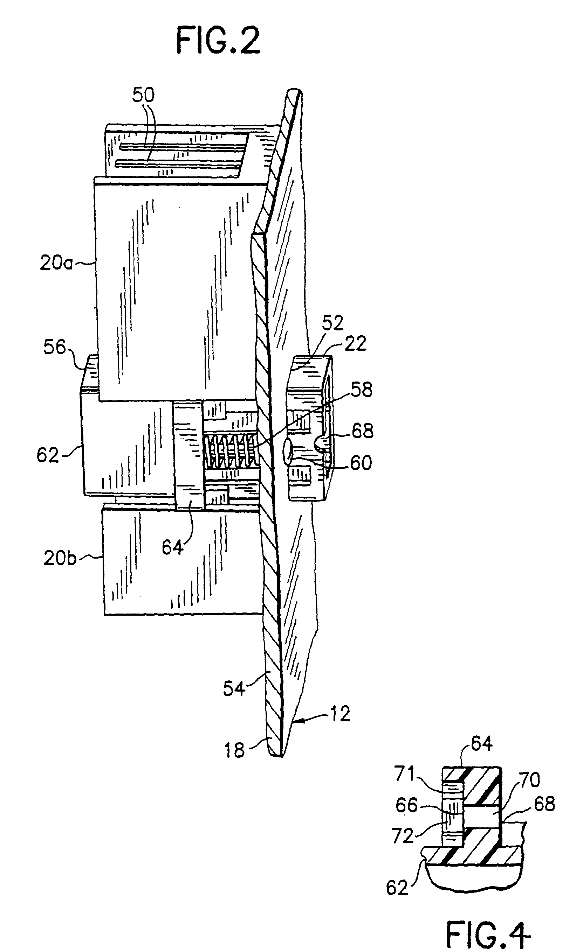

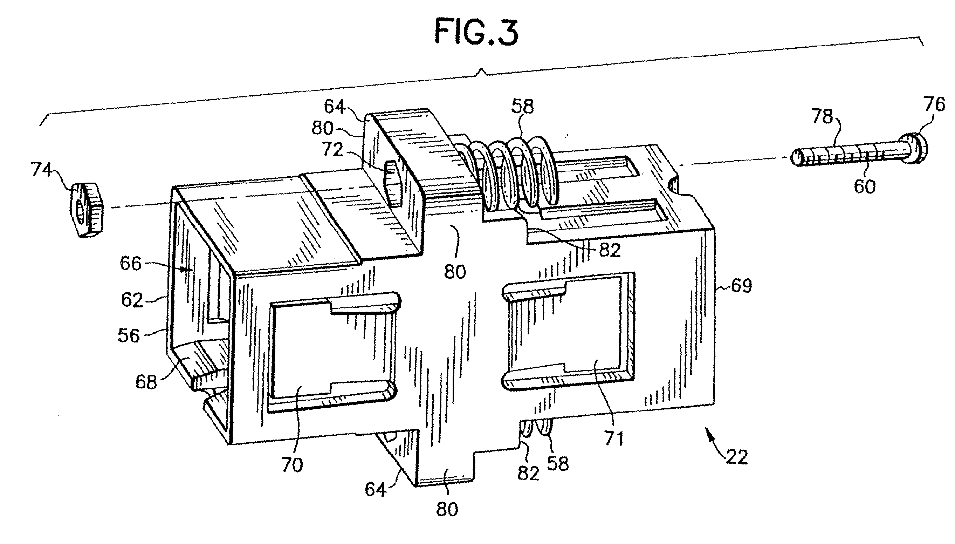

Referring now also to Figs. 2-4, in this embodiment the electrical connector 20 generally comprises two sections 20a, 20b. However, in alternate embodiments the connector 20 could include more or less than two sections. Each section 20a, 20b generally comprises a housing 48 and contacts 50. In this embodiment the contacts 50 comprise male pins. However, any suitable type of contacts could be used. The housings 48 form receiving areas for receiving the leading ends of the connector 26 to connect the male contacts 50 to the female contacts in the connector 26. The mother board 18 comprises an aperture 52 between its two opposite sides. The housings 48 are located on opposite sides of the aperture on a front side 54.

The adapter 22 generally comprises a housing 56, springs 58 and fasteners 60. The housing 56 is preferably a one-piece molded plastic member comprising a main section 62 and projections 64. The main section 62 has a center through-hole or through channel 66 with open opposite ends 68, 69 and two pairs of resilient lateral side latches 70, and 71; one pair proximate each end 68, 69. The hole 66 is suitably sized and shaped to receive the front ends of the optical connectors 16a, 16b therein such that the optical connectors can be inserted into the opposite open ends 68, 69 and can mate with each other inside the hole 66. The latches 70, 71 can removably retain the outer housing 28, 38 with the adapter housing 56 by resiliently positioning inside the latch areas 41 of the outer housings 28, 38. However, any suitable means could be used to connect the outer housings 28, 38 or optical connector assemblies 16a, 16b to the adapter housing 56. The projections 64 extend from opposite sides of the main section 62.

As seen best in Fig. 4, each projection 64 generally comprises a fastener mounting area 66 and a spring support area 68. The fastener mounting area 66 includes a through-hole with enclosed sides having a first section 70 and a second section 72. The two sections 70, 72 have different cross-sectional areas. A fastener support ledge 71 is established between the two different cross-sectional areas of the first and second sections 70, 72.

In this embodiment the first section 70 of the through-hole is sized and shaped to allow the shaft of the fastener 60 to pass therethrough. The second section 72 of the through-hole is sized and shaped to mateingly receive a polygon sided nut 74 of the fastener 60 therein. The second section 72 and the nut 74 are preferably suitably sized and shaped to press-fit the nut 74 into the second section 72 and prevent the nut 74 from axially rotating. However, any suitable type of connection between the fastener 60 and the housing 56 could be provided. The spring support area 68 forms a support surface for one end of the spring 58. In an alternate embodiment, the spring(s) could be integrally formed with the housing 56.

In this embodiment the springs 58 are comprised of coil springs. However, any suitable type of springs could be used. The springs 58 are located between the projections 64 and the front side 54 of the mother board 18. The fasteners 60 each generally comprise a bolt 76 and the nut 74. The bolts 76 each have a shaft 78 which extends through the mother board 18, through the center hole of one of the springs, through the first section 70 of the projections, and are threadingly connected to the nuts 74 in the second sections 72. The bolts 76 can longitudinally slide through their respective holes in the mother board 18. In alternate embodiments, any suitable type of fasteners could be used to movably connect the adapter housing 56 to the mother board 18.

In the embodiment shown the lateral sides 80 of the projections 64 form bearing surfaces which can contact the housings 48 of the connector sections 20a, 20b and slide thereagainst. The main section 62 of the housing 56 extends through the aperture 52 in the motherboard 18. More specifically, the main section 62 is longitudinally slideable in the aperture 52 between a forward position and a rearward position. The springs 58 bias the housing 56 in the forward position. However, the adapter housing 56 can longitudinally move relative to the connector 20 and mother board 18 towards a reward position, (Z-axis movement) when the second assembly 14 is being connected to the first assembly 12, with the springs 58 being compressed and the bolts 76 sliding relative to the mother board 18. Rear surfaces 82 on the projections 64 can function as stops to limit reward movement of the adapter housing 56. If the second assembly 14 is removed, the springs 58 can bias the adapter housing 56 back to its forward position.

The present invention allows for the adapter housing 56 to independently move in the Z-axis direction relative to the connector 20 and mother board 18. This independent Z-axis float can compensate for tolerances between the two assemblies 12, 14. The adapter housing 56 also preferably maintains a fit inside the backplane aperture 52 to allow for the adapter housing 56 to move in the X-axis and Y-axis directions. Similar to the Z-axis float, this can compensate for tolerances between the two assemblies 12, 14.

With the present invention, the single piece adapter housing design can provide a stronger body, better latch and better optical connector alignment, then conventional designs while still complying with backplane system applications. The present invention can also allow for a larger Z-axis float or movement than was available with conventional designs. The present invention is not necessarily limited to a backplane adapter for only optical connectors, but could be used as an adapter for any suitable type of connectors. The springs 58 provide a self-adjusting force and self-adjusting float for the adapter. The adapter of the present invention could be spaced from the electrical connector 20. However, the combined electrical connector 20a, 20b and adapter 22 configuration provides a compact arrangement with the electrical connector housings 48 aiding to locating the movable adapter housing 56 relative to the electrical connector housing 48 for easier initial insertion of the connectors 26a, 26b, 16b/28 as a group or groups into the housings 48, 56.

It should be understood that the foregoing description is only illustrative of the invention. Various alternatives and modifications can be devised by those skilled in the art without departing from the invention. Accordingly, the present invention is intended to embrace all such alternatives, modifications and variances which fall within the scope of the appended claims.

## Claims

1. An optical connector adapter (22) for connecting optical connectors (16a, 16b) to each other, the adapter (22) comprising:
a main section (62) having a through channel for receiving mating ends of the optical connectors; and
at least one projection (64) extending from the main section (62), the at least one projection (64) including a fastener mounting area (66) and a spring support area (68),
wherein a fastener (60) can attach the at least one projection (64) to an electrical component, and a spring (58) can be located between the spring support area (68) and the electrical component (12) to bias the adapter (22) at a first position relative to the electrical component.

2. An adapter (22) as in Claim 1 comprising two of the projections (64) extending from opposite sides of the main section.

3. An adapter (22) as in Claim 2 wherein the fastener mounting area (66) comprises a through-hole, having enclosed sides, which extend through each projection.

4. An adapter as in Claim 1 wherein the spring support area (68) surrounds the fastener mounting area (66) on one side of the projection (64).

5. An adapter (22) as in Claim 1 wherein the fastener mounting area (66) comprises a through-hole through the projection (64).

6. An adapter (22) as in Claim 5 wherein the through-hole comprises a fastener support ledge (71).

7. An adapter (22) as in Claim 6 wherein the through-hole comprises at least two different cross-sectional shapes.

8. An adapter as in Claim 7 wherein one of the shapes is adapted to receive a polygon sided fastener nut therein and interlock with the nut to prevent the nut from axially rotating in the through-hole.

9. An electronic and optical component system (10) comprising:
an electronic component (18); and
an optical connector adapter assembly (22) connected to the electronic component (18), the assembly comprising a housing (56) and at least one spring (58), the housing (56) being suitably sized and shaped to removably receive at least two mating optical connectors (16a, 16b), wherein the housing (56) is movably mounted in a hole through the electronic component (18), and wherein the at least one spring (58) biases the housing (56) relative to the electronic component (18) in a predetermined direction.

10. A system (10) as in Claim 9 wherein the spring comprises a coil spring.

11. A system (10) as in Claim 10 further comprising a fastener (60) movably connecting the adapter housing (56) to the electronic component (18), wherein the fastener (60) extends through the coil spring.

12. A system (10) as in Claim 9 wherein the housing (56) comprises a main section (62) and two projections (64) extending from opposite sides of the main section (62), and wherein two of the springs (58) are located directly between the electronic component (18) and the two projections (64), respectively.

13. A system (10) as in Claim 9 wherein the housing (56) is slidable along the electronic component (18) in the hole.

14. A system (10) as in Claim 9 wherein the housing (56) comprises a main section (62) and at least one projection (64) extending from the main section (62), the projection (64) comprising a through-hole with at least two different cross-sectional areas (70, 72).

15. A system (10) as in Claim 14 wherein at least one of the cross-sectional areas (72) is adapted to receive a polygon sided nut (74), and interlock with the nut to prevent the nut (74) from axially rotating in the through-hole.

16. A method of assembling a backplane assembly comprising steps of:
providing an optical connector adapter (22) having a housing (56) with a through channel for receiving two mating optical connectors (16a, 16b) in opposite directions;
movably mounting the housing (56) directly in a hole of an electronic component (18); and
biasing the housing (56) in a predetermined direction relative to the electronic component (18), wherein the housing (56) can slidingly move along the electronic component (18) in the hole.

17. A method as in Claim 16 wherein the step of biasing comprises locating at least two springs (58) directly between the electronic component (18) and at least one spring support area (68) on the housing (56).

18. A method as in Claim 16 wherein the step of movably mounting comprises connecting a fastener (60) between the housing (56) and the electronic component (18), wherein the housing (56) or the electronic component (18) can slide relative to the fastener.

19. A method as in Claim 17 wherein at least one coil spring biases the housing (56) relative to the electronic component (18), and
wherein the fastener (60) extends through the coil spring.

20. A method as in Claim 19 wherein the assembly comprises locating two of the coil springs and two of the fasteners (60) on opposite sides of the housing (56).
